# DEMANDE DE BREVET EUROPEEN

(11) **EP 0 913 501 A1**
(43) Date de publication de la demande: **06.05.1999**
(21) Numéro de dépôt: 98402596.5
(22) Date de dépôt: 19.10.1998
(51) Int. Cl.: C25D 3/56, F16L 58/08

(54) **Procédé de réparation par chemisage d'un tube et utilisation du procédé**

(30) Priorité: 29.10.1997 FR 9713575
(71) Demandeur: FRAMATOME, 92400 Courbevoie (FR)
(72) Inventeur: Michaut, Bernard, 69003 Lyon (FR); Armyanov, Stafan Atanasov, Sofia 1000 (BG); Tachev, Dragomir Mladenov, Sofia 1184 (BG); Vitkova, Stefana Dimitrova, Sofia 1113 (BG); Valova, Evgenia Ivanova, Sofia 1000 (BG)
(74) Mandataire: Bouget, Lucien

(57) **Abrégé**

On dépose, par électrolyse, sur une surface d'un tube une couche en alliage de nickel amagnétique d'une épaisseur supérieure à 0,1 mm, dans au moins une zone s'étendant suivant la longueur du tube. L'alliage de nickel renferme au moins 15 % en poids de rhénium de manière à être amagnétique. De préférence, l'alliage de nickel est un alliage binaire nickel-rhénium renfermant entre 15 % et 35 % de rhénium et de préférence entre 25 % et 30 % de rhénium.

## Description

L'invention concerne un procédé de réparation par chemisage d'un tube et en particulier d'un tube de générateur de vapeur qui facilite son contrôle ultérieur en service, en particulier par courants de Foucault.

On connaît, par le FR-95 02720, un procédé de réparation d'un tube tel qu'un tube de générateur de vapeur par chemisage électrolytique. Le procédé est applicable en particulier aux tubes de générateur de vapeur des réacteurs nucléaires à eau sous pression qui ont été détériorés en service à l'intérieur du générateur de vapeur et qui ont subi par exemple une fissuration dans une partie de leur paroi.

On réalise, par électrolyse, sur la surface interne ou sur la surface externe du tube, le dépôt d'une couche métallique en alliage de nickel amagnétique ayant une épaisseur supérieure à 0,5 mm et par exemple une épaisseur de l'ordre d'un millimètre.

Le choix d'un dépôt d'une couche d'alliage amagnétique permet de réaliser facilement un contrôle de la zone réparée, par courants de Foucault.

En plus de ses propriétés d'amagnétisme, le dépôt d'alliage de nickel électrolytique doit être suffisamment ductile et adhérent pour subir les déformations en service du tube, par exemple sous l'effet de la température, et la différence de pression entre la partie interne et l'extérieur du tube, c'est-à-dire la différence de pression entre l'eau du circuit primaire du réacteur nucléaire et l'eau d'alimentation du circuit secondaire.

En outre, le dépôt d'alliage de nickel électrolytique ne doit pas être sensible à la corrosion sous tension dans les conditions d'utilisation du générateur de vapeur, au contact de l'eau primaire ou au contact de l'eau d'alimentation.

On a proposé en particulier d'effectuer la réparation par dépôt d'une couche d'un alliage de nickel et de bore renfermant de 0,5 à 5 % en poids de bore dans une zone à réparer d'un tube de générateur de vapeur en alliage de nickel (par exemple l'alliage 600 ou l'alliage 690). Une couche de réparation en alliage nickel-bore d'une épaisseur de l'ordre d'un millimètre permet en particulier de supporter les efforts s'exerçant sur le tube de générateur en service et en particulier les efforts dus à la différence de pression entre l'intérieur et l'extérieur du tube. De plus, la couche de réparation qui est amagnétique peut être contrôlée après son dépôt sur le tube, par une méthode habituelle de contrôle utilisant les courants de Foucault. Une telle méthode peut être mise en oeuvre facilement à l'intérieur d'un tube de générateur de vapeur dont les extrémités sont serties dans une plaque tubulaire et qui n'est accessible que par le dessous de la plaque tubulaire, par l'intérieur de la boîte à eau du générateur de vapeur.

Cependant, il est apparu que les couches de réparation en nickel-bore qui sont amagnétiques après leur dépôt par électrolyse deviennent progressivement ferromagnétiques, au cours du temps, pendant l'utilisation du générateur de vapeur sur lequel on a réalisé la réparation du tube. En effet, la couche de réparation en nickel-bore, qui est soumise à une température de l'ordre de 320°C à 350°C pendant de très longues périodes au cours de l'utilisation du générateur de vapeur, subit une transformation structurale, de telle sorte que la couche devient progressivement ferromagnétique.

Il n'est plus possible dans ce cas d'effectuer de manière simple des contrôles par courants de Foucault sur les tubes qui ont été réparés, pendant les périodes d'arrêt du réacteur nucléaire, après une certaine période de fonctionnement.

De manière plus générale, dans le cas de l'utilisation de tubes en alliage de nickel dans un échangeur de chaleur ou dans une installation industrielle de type quelconque, il peut être nécessaire de disposer d'un procédé de réparation efficace de zones des tubes qui ont été détériorés en service. Ce procédé doit permettre également un contrôle des tubes par des moyens de contrôle habituels utilisant les courants de Foucault.

Le but de l'invention est donc de proposer un procédé de réparation par chemisage d'un tube consistant à déposer par électrolyse, sur une surface du tube, une couche en alliage de nickel amagnétique d'une épaisseur supérieure à 0,1 mm, dans au moins une zone s'étendant suivant la longueur du tube, ce procédé permettant d'obtenir une couche de réparation ayant de très bonnes caractéristiques de résistance mécanique. et de résistance à la corrosion et qui reste parfaitement amagnétique après une utilisation prolongée du tube à haute température.

Dans ce but, l'alliage de nickel renferme au moins 15 % en poids de rhénium, de manière que l'alliage soit amagnétique.

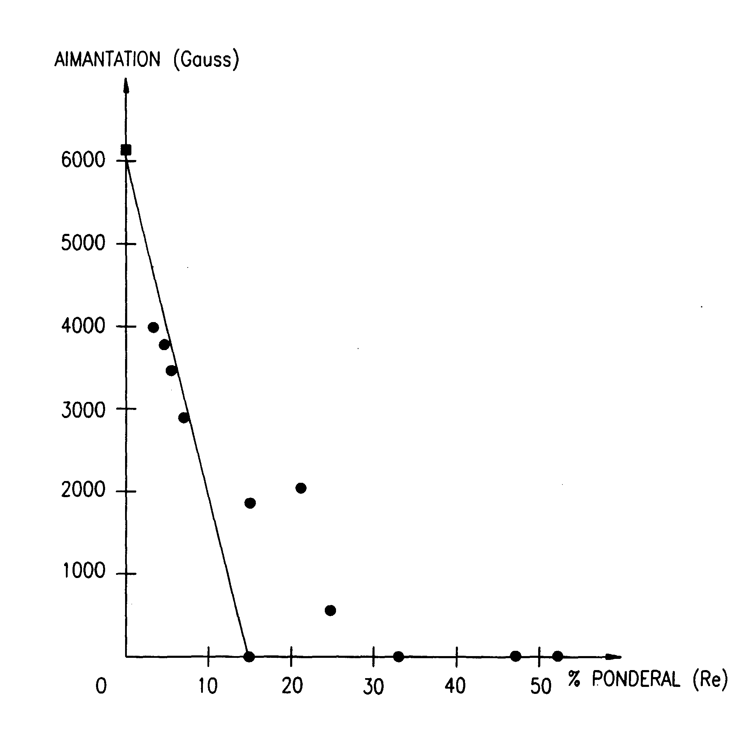

Afin de bien faire comprendre l'invention, on va maintenant décrire, en se référant à la figure jointe en annexe, la réalisation de couches de réparation en alliage de nickel et de rhénium sur un tube tel qu'un tube de générateur de vapeur en alliage de nickel.

La figure unique est un diagramme donnant l'aimantation des couches d'alliage nickel-rhénium obtenues par dépôt électrolytique en fonction de la teneur en rhénium de ces couches.

Dans le but de mettre au point un procédé de réparation de tubes en alliage de nickel d'un générateur de vapeur de réacteur nucléaire à eau sous pression, par dépôt sur le tube d'une couche d'un alliage de nickel et de rhénium obtenue par électrolyse, on a effectué des expériences préliminaires visant en particulier à déterminer les proportions idéales de rhénium dans la couche de réparation, pour obtenir une couche ductile, adhérente, résistant à la corrosion et sensiblement amagnétique.

On a réalisé sur des substrats en laiton des couches minces d'un alliage nickel-rhénium, par électrolyse d'une solution de sulfamate de nickel Ni(NH₂SO₃)₂ renfermant un sel de rhénium tel que NH₄ReO₄ et un additif tel que H₃BO₃.

Comme il est visible sur le tableau 1 donné ci-dessous, on a élaboré dix échantillons recouverts d'un dépôt électrolytique de couches minces d'alliage nickel-rhénium de compositions différentes, sur des substrats en laiton.

Dans tous les cas, l'électrolyse est réalisée dans les conditions suivantes :
pH de l'électrolyte 3,0
température de l'électrolyte 20°C
densité de courant 0,75 A/dm²
anode en platine 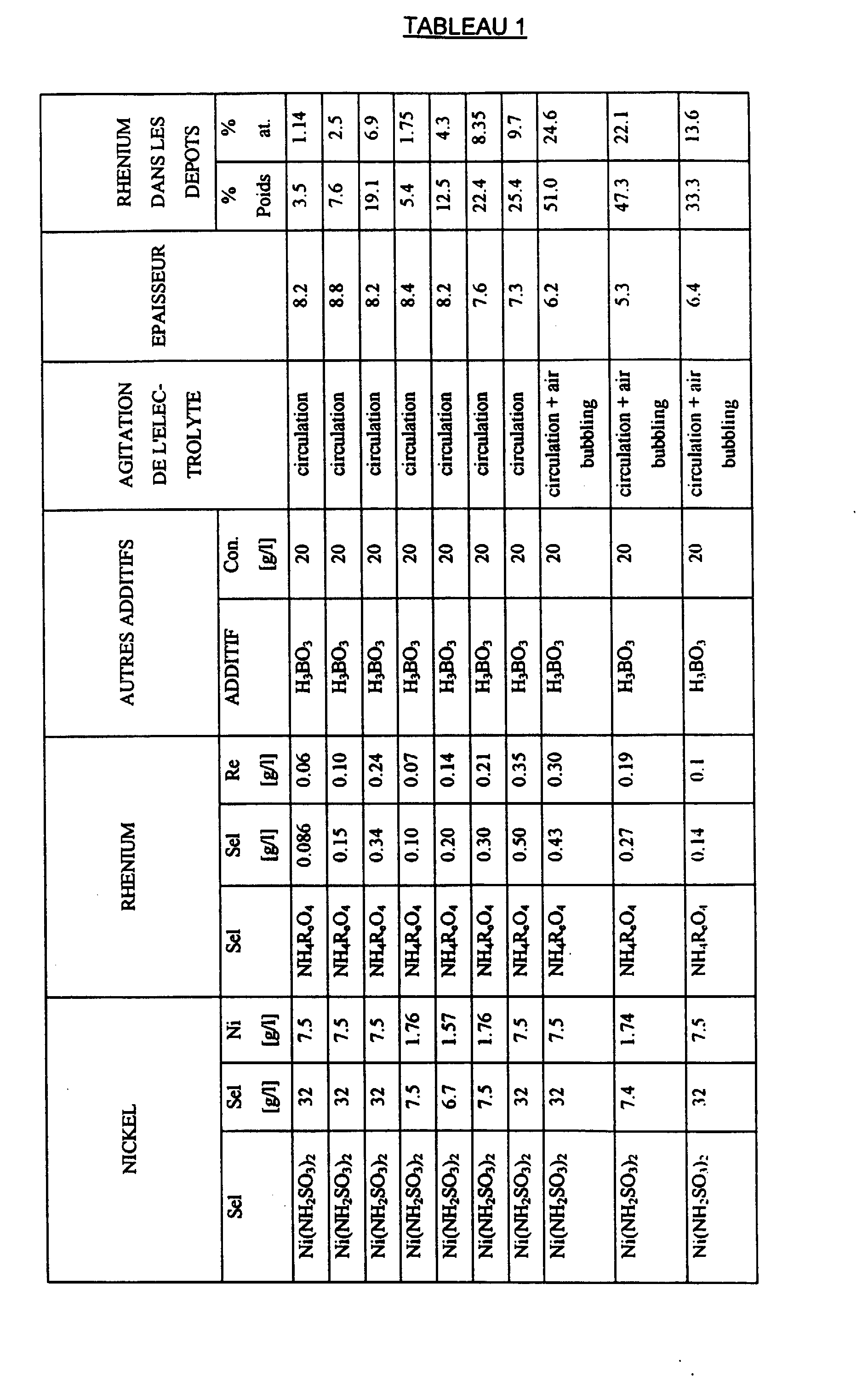
cathode : substrat en laiton.

Le dépôt est réalisé dans une cellule électrolytique thermostatée d'un volume de 300 ml dans laquelle la solution d'électrolyte est mise en circulation et soumise éventuellement à un bullage par de l'air.

Les dépôts ont une épaisseur de 8 à 9 µm.

Dans les premières colonnes du tableau 1, on donne la composition de l'électrolyte utilisé, pour la réalisation de chacun des dix échantillons par revêtement électrolytique d'un substrat de laiton.

En ce qui concerne la teneur en nickel de l'électrolyte, on indique la nature du sel de nickel utilisé, qui est le sulfamate Ni(NH₂SO₃)₂, la concentration en sel dans l'électrolyte en g/l et la teneur en nickel de l'électrolyte, également en g/l.

De la même manière, en ce qui conceme le rhénium, on indique la nature du sel de rhénium utilisé dans l'électrolyte, qui est le perrhénate d'ammonium NH₄ReO₄, la concentration du sel en g/l dans l'électrolyte et la concentration équivalente de rhénium dans l'électrolyte. Il serait possible également d'utiliser du perrhénate de potassium KReO₄.

Enfin, on indique également la concentration d'additif H₃BO₃ dans l'électrolyte, cette concentration étant constante et égale à 20 g/l.

On indique ensuite les conditions d'agitation de l'électrolyte, cette agitation étant réalisée par une simple circulation de l'électrolyte dans le cas des échantillons 1 à 7 et par la circulation de l'électrolyte combinée à un bullage d'air dans le cas des échantillons 9 et 10.

On indique ensuite l'épaisseur en micromètre des couches obtenues sur chacun des échantillons 1 à 10 et enfin, la teneur en rhénium des dépôts en pourcentage pondéral et en pourcentage atomique.

Les variations de la teneur en rhénium des dépôts sont obtenues en faisant varier la concentration de l'électrolyte en sel de rhénium. La composition de l'alliage déposé est déterminée par analyse à la microsonde à rayons X.

On a effectué des dépôts dont la teneur en rhénium varie entre 1,14 % atomique (3,5 % pondéraux) à 22,1 % atomiques (47,3 % pondéraux).

Sur chacun des échantillons revêtus d'une couche d'alliage nickel-rhénium, on effectue des essais de ductilité par flexion et des essais de corrosion à haute température en présence d'eau ou de vapeur d'eau.

On réalise également une mesure de la résistivité électrique des couches d'alliage, une haute résistivité électrique étant un indice de résistance à la corrosion.

On réalise de plus des mesures magnétiques sur les couches obtenues, de manière à déterminer la décroissance de leur ferromagnétisme en fonction de la teneur en rhénium. Pour cela, on utilise un traceur de cycles d'hystérésis B-H et on mesure l'induction à saturation sous un champ de 1 kOe.

Les valeurs correspondantes de l'aimantation en Gauss sont reportées sur la figure en fonction du pourcentage pondéral en rhénium dans les couches déposées sur les échantillons de laiton.

On a également reporté sur la figure l'aimantation spontanée du nickel pur qui est supérieure à 6000 Gauss.

On a tracé, sous la forme d'une droite passant par le point relatif au nickel pur et les points relatifs à des couches de nickel-rhénium renfermant entre 3,5 % et 8 % en poids de rhénium, la courbe représentative de la décroissance de l'aimantation en fonction de la teneur en rhénium des couches. Cette droite coupe l'axe des abscisses approximativement en un point correspondant à un alliage nickel-rhénium à 15 % en poids de rhénium.

Les alliages renfermant plus de 30 % de rhénium présentent une aimantation pratiquement nulle, les points étant reportés sur l'axe des abscisses.

Trois points relatifs à des couches nickel-rhénium renfermant entre 15 % et 30 % en poids de rhénium se trouvent en dehors de la droite représentative de la décroissance de l'aimantation qui a été tracée sur le diagramme et au-dessus de l'axe des abscisses. Ce fait peut être rattaché à des erreurs expérimentales dans la mesure de l'aimantation ou à la présence d'impuretés dans les couches de nickel-rhénium déposées par électrolyse.

Afin de garantir des propriétés d'amagnétisme des couches de nickel-rhénium, on a donc utilisé la limite donnée par la droite constituant la courbe théorique de décroissance de l'aimantation, pour obtenir une aimantation sensiblement nulle de la couche, cette limite étant de 15 % en poids de rhénium.

De ce fait, les couches d'alliage de nickel et de rhénium déposées dans le cadre du procédé de réparation suivant l'invention ont une teneur en rhénium supérieure à 15 % en poids.

En outre, les couches de nickel-rhénium utilisées pour la réparation de tubes doivent présenter une structure à une seule phase, ces couches devant être constituées par une solution solide de rhénium dans le nickel.

Il est donc préférable et pratiquement nécessaire de limiter la teneur en rhénium dans les couches déposées par le procédé de réparation suivant l'invention, à une valeur de 35 % en poids environ.

De manière préférentielle, les couches de rhénium déposées dans le procédé de réparation suivant l'invention doivent contenir entre 15 % et 35 % de rhénium.

Du fait qu'il est possible de garantir une très faible aimantation résiduelle des couches déposées et donc un très faible magnétisme à une teneur en rhénium de l'ordre de 25 % en poids, comme il apparaît en particulier sur la figure, on peut choisir comme limite inférieure préférentielle de l'intervalle des teneurs en rhénium cette valeur de 25 %.

En outre, il est également nécessaire de limiter la teneur en rhénium des couches en alliage amagnétique nickel-rhénium de manière à limiter le prix de revient de ces couches, le rhénium étant un matériau de coût très élevé. Pratiquement, il est avantageux de limiter la teneur en rhénium à une valeur de 30 % en poids.

Un intervalle préférentiel de la teneur en rhénium des couches sera donc compris entre 25 % et 30 % en poids.

Les couches obtenues ont une structure à une seule phase parfaitement homogène qui est une solution solide de rhénium dans la matrice de nickel.

Les essais de pliage des plaquettes échantillons ont montré que les couches en alliage de nickel-rhénium présentent une bonne ductilité dans les intervalles de composition retenus.

De plus, dans ces intervalles de composition, les alliages de nickel et de rhénium présentent également une résistivité électrique élevée.

On a effectué des recuits à 400°C pendant des durées de plusieurs heures sur des échantillons revêtus de couches de nickel-rhénium. On a pu observer, par des mesures magnétiques, que le recuit n'affecte pas les propriétés d'aimantation des couches, c'est-à-dire que ces couches restent amagnétiques après le traitement thermique.

Des essais de pliage des échantillons à 90° ont pu être effectués sans qu'on observe de fissuration des couches d'alliage nickel-rhénium.

On a donc effectué des réparations de tubes de générateur de vapeur en alliage de nickel, par dépôt électrolytique d'une couche en alliage de nickel et de rhénium renfermant, de préférence, entre 25 % et 30 % en poids de rhénium.

Le revêtement est réalisé sur la surface interne du tube, en utilisant un dispositif de revêtement selon l'art antérieur, décrit par exemple dans les brevets FR-A-2.565.323 et EP-A-0.167.513.

L'électrolyte peut être constitué, comme précédemment, par du sulfamate de nickel mélangé, dans une certaine proportion, avec un sel de rhénium, tel que le perrhénate d'ammonium et un additif tel que H₃BO₃.

Les concentrations de rhénium dans l'électrolyte sont calculées de préférence de manière à déposer un alliage renfermant entre 25 % et 30 % de rhénium.

L'électrolyte est mis en circulation au contact de la surface intérieure du tube, dans la zone à réparer, et l'électrolyse est poursuivie jusqu'à l'obtention d'une couche ayant une épaisseur comprise entre 0,1 et 1,5 mm et de préférence une couche d'une épaisseur supérieure à 0,5 mm.

Des essais ont montré que la couche d'alliage de nickel et de rhénium obtenue présente une bonne ductilité (allongement de 5 à 10 %) et une forte résistivité électrique supérieure à 1µOhm/m.

De plus, la couche est non magnétique et garde son amagnétisme après un maintien à 350° de très longue durée.

Enfin, la couche est parfaitement adhérente sur le substrat constitué par le tube en alliage de nickel.

Il est possible de mettre en oeuvre le procédé suivant l'invention en utilisant des électrolytes différents d'électrolytes renfermant un sulfamate de nickel.

Il est possible en particulier d'utiliser un bain d'électrolyse renfermant un sulfate de nickel NiSO₄.6H₂O et un composé de rhénium tel que le perrhénate de potassium KReO₄. Le bain d'électrolyse peut renfermer de plus un chlorure de nickel NiCl₂H₂O et du H₃BO₃.

Le bain d'électrolyse peut renfermer de plus, à titre d'additif, de l'acide citrique et/ou de l'ammoniac ainsi que d'autres additifs.

Dans le cas de l'utilisation d'un bain renfermant du sulfamate de nickel, on peut également ajouter au bain d'autres additifs que H₃BO₃, et par exemple un agent de mouillage et du bromure de nickel.

Le procédé suivant l'invention est généralement mis en oeuvre par dépôt d'un alliage binaire nickel-rhénium dont la concentration en rhénium est parfaitement réglée et qui renferme plus de 15 % en poids de rhénium, le reste de l'alliage étant constitué par du nickel et des impuretés inévitables.

De préférence, l'alliage déposé renferme de 15 à 35 % de rhénium ou, de manière plus précise, de 25 à 30 % en poids de rhénium, en plus du nickel et des impuretés inévitables.

Il est possible également de déposer un alliage temaire ou supérieur renfermant du nickel, plus de 15 % en poids de rhénium et un ou plusieurs éléments supplémentaires choisis dans le groupe : silicium, vanadium, aluminium, chrome, titane, molybdène, antimoine, zinc, cuivre, tungstène, ruthénium et rhodium. Cependant, le contrôle de la composition d'alliages ternaires ou supérieurs est extrêmement difficile et l'addition d'un élément métallique ou métalloïde tel qu'indiqué plus haut a tendance à diminuer la stabilité thermique des propriétés d'amagnétisme de l'alliage déposé.

Il est possible également de déposer des couches d'alliages de nickel et de rhénium renfermant également du phosphore et/ou du bore.

Dans tous les cas, l'alliage réalisé suivant l'invention renferme, outre l'un au moins des éléments cités, du rhénium dans les proportions indiquées dans le cas des alliages binaires et le solde de l'alliage est constitué par du nickel, à l'exception des impuretés inévitables

L'invention s'applique non seulement à la réparation de tubes de générateur de vapeur en alliage de nickel détériorés sur leur surface interne ou sur leur surface externe mais également à la réparation de tout tube en acier inoxydable ou en alliage de nickel d'une installation industrielle.

## Revendications

1. Procédé de réparation par chemisage d'un tube consistant à déposer par électrolyse, sur une surface du tube, une couche en alliage de nickel amagnétique d'une épaisseur supérieure à 0,1 mm, dans au moins une zone s'étendant suivant la longueur du tube, caractérisé par le fait que l'alliage de nickel renferme au moins 15 % en poids de rhénium, de manière que l'alliage soit amagnétique.

2. Procédé suivant la revendication 1, caractérisé par le fait que l'alliage renferme de 15 % à 35 % de rhénium, le solde de l'alliage, à l'exception d'impuretés inévitables, étant constitué par du nickel.

3. Procédé suivant la revendication 2, caractérisé par le fait que l'alliage de nickel renferme de 25 % à 30 % de rhénium, le solde de l'alliage, à l'exception d'impuretés inévitables, étant constitué par du nickel.

4. Procédé suivant la revendication 1, caractérisé par le fait que l'alliage de nickel renferme de plus au moins l'un des éléments suivants : silicium, vanadium, aluminium, chrome, titane, molybdène, antimoine, zinc, cuivre, tungstène, ruthénium, rhodium, phosphore et bore, le solde de l'alliage, à l'exception d'impuretés inévitables, étant constitué par du nickel.

5. Procédé suivant l'une quelconque des revendications 1 à 4, caractérisé par le fait que la couche en alliage de nickel et de rhénium amagnétique est déposée par électrolyse d'une solution renfermant du sulfamate Ni(NH₂SO₃)₂ et un perrhénate d'ammonium ou de potassium, dans des proportions réglées en fonction de la teneur en rhénium à obtenir dans la couche déposée.

6. Procédé suivant la revendication 5, caractérisé par le fait que l'électrolyte renferme de plus de l'H₃BO₃.

7. Utilisation d'un procédé suivant l'une quelconque des revendications 1 à 6 pour effectuer la réparation d'un tube en acier inoxydable ou en alliage de nickel détérioré sur sa surface interne ou sur sa surface externe.

8. Utilisation suivant la revendication 7, caractérisée par le fait que le tube est un tube de générateur de vapeur d'un réacteur nucléaire à eau sous pression.
